# EUROPÄISCHE PATENTSCHRIFT

(11) **EP 1 962 255 B1**
(45) Veröffentlichungstag und Bekanntmachung des Hinweises auf die Patenterteilung: **20.01.2010**
(21) Anmeldenummer: 08101125.6
(22) Anmeldetag: 31.01.2008
(51) Int. Cl.: G08G 1/16, B60Q 5/00

(54) **Steuergerät und Verfahren zur Ausgabe eines akustischen Warnsignals**
Control device and method for reproducing an acoustic warning signal
Appareil de commande et procédé d'émission d'un signal d'alerte acoustique

(30) Priorität: 20.02.2007 DE 102007008259
(43) Veröffentlichungstag der Anmeldung: 27.08.2008
(73) Patentinhaber: ROBERT BOSCH GMBH, 70442 Stuttgart (DE)
(72) Erfinder: Engeln, Arnd, 72072 Tuebingen (DE); Suessemilch, Irene, 70569 Stuttgart (DE)

(56) Entgegenhaltungen:
- DE-A1- 10 345 680
- DE-A1-102004 050 597

## Beschreibung

### Stand der Technik

Die Erfindung geht aus von einem Steuergerät oder einem Verfahren nach Gattung der unabhängigen Ansprüche. Aus der DE 103 34 013 A1 sind bereits ein Verfahren und ein Sicherheitssystem zur Verbesserung der Sicherheit von Verkehrsteilnehmern bekannt. Derartige Verfahren und Sicherheitssysteme werden im Kraftfahrzeug eingesetzt, um mittels einer vorausschauenden Sensorik die Kritizität einer Verkehrssituation zu detektieren und gegebenenfalls andere Verkehrsteilnehmer durch Aussendung optischer und/akustischer Signale auf die Kritizität der Verkehrssituation aufmerksam zu machen. Hierdurch werden andere Verkehrsteilnehmer veranlasst, die kritische Verkehrssituation zu entschärfen.

Die DE 103 45 680 A1 zeigt ein Steuergerät mit einer Schnittstelle für Sensoren zur Erfassung einer Verkehrssituation eines Fahrzeugs, mit einer Einheit zur Auswertung von Messgrößen der Sensoren und einer Einheit zur Bewertung der Messgrößen zur Bestimmung der Verkehrssituation hinsichtlich einer möglichen Gefährdung, mit einer Einheit zur Aktivierung der Ausgabe eines akustischen Warnsignals und wenigstens einer Schnittstelle zu mindestens einer Einheit zur Ausgabe eines akustischen Warnsignals.

### Offenbarung der Erfindung

### Vorteile der Erfindung

Das erfindungsgemäße Steuergerät und das erfindungsgemäße Verfahren mit den Merkmalen der unabhängigen Ansprüche haben dem gegenüber den Vorteil, dass durch Ausgabe eines geeigneten akustischen Warnsignals auch der Fahrer des Fahrzeugs selber auf eine Kritizität einer Verkehrssituation aufmerksam gemacht wird.

Verkehrsteilnehmer sind es aufgrund ihrer Erfahrung im Straßenverkehr gewohnt, durch Warnsignale, welche dem Signal einer Autohupe ähneln, auf eine Kritizität einer Verkehrssituation aufmerksam gemacht zu werden. Nimmt der Fahrer eines Fahrzeugs ein Warnsignal wahr, welches sich von dem Warnsignal der Autohupe seines eigenen Fahrzeugs unterscheidet, so assoziiert er hiermit den Hinweis eines anderen

Verkehrsteilnehmers hinsichtlich der Kritizität einer Verkehrssituation, und fühlt sich aufgefordert, durch eigenes Handeln die kritische Verkehrssituation zu entschärfen. Nimmt der Fahrer eines Fahrzeugs jedoch ein Warnsignal wahr, welches wie das Warnsignal der Autohupe seines eigenen Fahrzeugs klingt, so assoziiert er hiermit möglicherweise eine Fehlfunktion der Autohupe seines Fahrzeugs bzw. eine Fehlfunktion der Steuergeräte seines Fahrzeugs, an welches die Autohupe angeschlossen ist. Aus diesem Grund wird erfindungsgemäß ein akustisches Warnsignal ausgesandt, welches sich von dem Warnsignal der Autohupe des eigenen Fahrzeugs unterscheidet, aber einem Hupsignal zumindest ähnlich ist. Mit diesem für ihn gut verständlichen akustischen Warnsignal assoziiert der Fahrer daher einen an ihn gerichteten Hinweis hinsichtlich der Kritizität einer Verkehrssituation, und er fühlt sich daher veranlasst, seine volle Aufmerksamkeit und Reaktionsbereitschaft auf die ihn umgebende Verkehrssituation zu richten und bei Bedarf in die kritische Verkehrssituation einzugreifen.

Durch die in den abhängigen Ansprüchen aufgeführten Maßnahmen sind vorteilhafte Weiterbildungen und Verbesserungen des im Anspruch angegebenen Steurergerätes, der Warneinrichtung sowie des Verfahrens möglich. Erfindungsgemäß ist das auszugebende Warnsignal zuvor in einer Speichereinheit abgespeichert. Hierbei sind erfindungsgemäß, nicht nur ein einzelnes Warnsignal, sondern mehrere Warnsignale in einem Speicher des Steuergeräts abgespeichert. Dieses hat den Vorteil, dass das Warnsignal vom Benutzer entsprechend seiner Präferenz ausgewählt werden kann. In dem Fall, dass die Autohupe des Fahrzeugs ausgetauscht wird, und eine andere Autohupe mit einem anderen Warnsignal eingebaut wird, ist es somit möglich, das Warnsignal des Steuergerätes gegebenenfalls so anzupassen, dass es sich von dem Warnsignal einer neu eingebauten Autohupe unterscheidet. Ferner ergibt sich die Möglichkeit, zu einem späteren Zeitpunkt weitere akustische Warnsignale in der Speichereinheit abzuspeichern.

In einer weiteren Ausgestaltung der Erfindung sind Referenzgrößen in einem Speicher des Steuergerätes abgespeichert, welche zur Bestimmung der Verkehrssituation mittels eines funktionalen Zusammenhangs von Messgrößen und dieser Referenzgrößen notwendig sind. Es ist somit nicht notwendig, Referenzgrößen durch den Fahrer einzugeben oder durch das Steuergerät zu berechnen, sondern es kann direkt auf diese gespeicherten Referenzgrößen zugegriffen werden. Zusätzlich besteht die Möglichkeit, im Zuge einer später vorzunehmenden Aktualisierung der Referenzgrößen neue Referenzgrößen in die Speichereinheit einzulesen.

Nach einer weiteren Ausgestaltung ist das Steuergerät über eine Schnittstelle mit Sensoren zur Erfassung der Verkehrssituation des Fahrzeugs verbunden. Durch Auswertung der Messgrößen der Sensoren anhand des Steuergerätes ist es möglich, eine vorliegende Verkehrssituation hinsichtlich ihrer Kritizität zu beurteilen. Das Steuergerät ist zusätzlich über eine weitere Schnittstelle mit Einheiten zur Ausgabe eines akustischen Warnsignals verbunden. Durch die Anbindung der Einheiten zur akustischen Ausgabe des Warnsignal über eine Schnittstelle ist es möglich, die Einheiten zur akustischen Ausgabe durch andere Einheiten bei Bedarf einfach auszutauschen.

In einer weiteren Ausführungsform der Erfindung handelt es sich bei den Sensoren bevorzugt um Ultraschallsensoren, Radarsensoren, Infrarotsensoren oder auch anderen Sensoren zur Abstandsmessung wie auch zur Wegmessung, da diese im Fahrzeug heutzutage bereits zur Abstandsmessung Verwendung finden und daher kein zusätzliches System zur Umfelderfassung vorgesehen werden muss. Bei den Sensoren kann es sich auch um Lichtsensoren und/oder Infrarotsensoren zur Erfassung von Meßgrößen für ein Video- oder Bildsystem handeln.

Eine weitere Ausgestaltung der Warneinrichtung beschreibt die Ausgabe eines in einem Speicher abgespeicherten akustischen Warnsignals über einen oder mehrere Lautsprecher. Besonders vorteilhaft ist es, zur Ausgabe des akustischen Warnsignals die Lautsprecher dcs Autoradios oder des Navigationssystems zu nutzen, da diese üblicherweise bereits im Fahrzeugs vorhanden sind und somit keine weiteren Lautsprecher eingebaut werden müssen. Ebenso ist es möglich, zur Ausgabe eines akustischen Warnsignals einen zusätzlichen Lautsprecher zu nutzen, welcher an einer für den Fahrer besonders günstig erscheinenden Position im Fahrzeug eingebaut wird.

Gemäß einer weiteren Ausführungsform der Erfindung wird eine Warneinrichtung beschrieben, bei welcher das Steuergerät über eine Schnittstelle eine weitere Einheit zur Erzeugung des akustischen Warnsignals mittels eines Steuersignals aktiviert. Hierdurch kann vorzugsweise auf die Ausgabe des akustischen Warnsignals über Lautsprecher verzichtet werden. Zur Ausgabe des Warnsignals kann hierbei auf einen akustischen Signalgeber zurückgegriffen werden. Hierfür eignen sich beispielsweise Autohupen, Hupen nach dem Prinzip des Wagnerschen Hammers oder auch mit Druckluft betriebene Hupen.

### Kurze Beschreibung der Zeichnungen

Ausführungsbeispiele der Erfindung sind in den Zeichnungen dargestellt und in der nachfolgenden Beschreibung näher erläutert.
Figur 1 zeigt erfindungsgemäß ein Steuergerät mit den damit verbundenen Sensoren sowie weitere mit dem Steuergerät verbundene Einheiten zur Ausgabe eines akustischen Warnsignals, welche als Lautsprecher ausgebildet sind.
Figur 2 zeigt erfindungsgemäß ein Steuergerät mit den damit verbundenen Sensoren sowie eine Einheit zur Ausgabe eines akustischen Warnsignals, welche mit dem Steuergerät verbunden ist. Diese Einheit ist als ein Signalgeber ausgebildet.
Figur 3 zeigt erfindungsgemäß ein Steuergerät aus Figur 1 in einem Fahrzeug, welches sich in einer Verkehrssituation mit anderen Teilnehmern befindet.

### Ausführungsformen der Erfindung

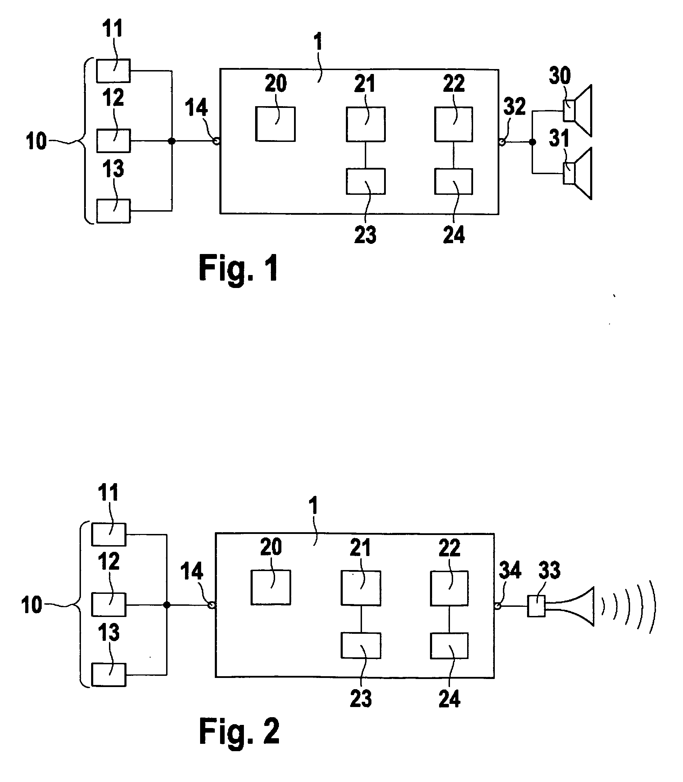

Figur 1 zeigt ein Steuergerät 1, welches über eine Schnittstelle 14 mit Sensoren 10 verbunden ist. Die Sensoren können beispielsweise als Ultraschallsensoren 11, Radarsensoren 12, sowie andere Sensoren 13 zur Abstandsmessung, aber auch als Sensoren zur Wegmessung ausgeführt sein. Das Steuergerät 1 beinhaltet eine Einheit 20 zur Auswertung von Messgrößen der Sensoren 10, eine Einheit 21 zur Bewertung von Messgrößen zur Bestimmung der Verkehrssituation sowie eine Einheit 22 zur Aktivierung der Ausgabe eines akustischen Warnsignals. Ferner beinhaltet das Steuergerät 1 einen Speicher 23, welcher beispielsweise Referenzgrößen zur Bestimmung der Verkehrssituation beinhaltet. Außerdem beinhaltet das Steuergerät 1 in einer Ausführungsform einen Speicher 24, in welchem ein akustisches Warnsignal oder Daten zur Erzeugung eines Signals, beispielsweise in Form einer MIDI-Datei oder einer MP3-Datei, abgespeichert sind. Mit weiteren Schnittstellen 32, 34 ist das Steuergerät 1 mit weiteren Einheiten 30, 31, 33 zur Ausgabe eines akustischen Warnsignals verbunden. Diese Einheiten 30, 31, 33 zur Ausgabe eines akustischen Warnsignals können in einer ersten Ausführungsform sowohl als Lautsprecher 30, 31 aber auch in einer weiteren Ausführungsform als eine weitere Einheit 33 zur akustischen Schallerzeugung ausgeführt sein (siehe Figur 2). Die Einheit 33 kann als Signalgeber in Form einer Autohupe, einer Hupe nach dem Prinzip des Wagnerschen Hammers oder auch einer Drucklufthupe ausgebildet sein.

Die Auswertung der Messgrößen der Sensoren 10 wird in der Einheit 20 vorgenommen. Die daran anschließende Bewertung der Messgrößen in der Einheit 21 mittels eines funktionalen Zusammenhangs der Messgrößen sowie der in dem Speicher 23 vorliegenden Referenzgrößen führt zu einer Bestimmung der Verkehrssituation hinsichtlich einer möglichen Gefährdung der Verkehrsteilnehmer. Beispielsweise ist es möglich, dass die Einheit 21 als Mikroprozessor ausgebildet ist, welcher mittels eines Algorithmus den funktionalen Zusammenhang zwischen den Messgrößen und den Referenzgrößen bestimmt. Der Algorithmus kann in Form von Software auf dem Mikroprozessor ausgebildet sein, so dass es möglich ist, den Algorithmus zu einem späteren Zeitpunkt durch Einspielen einer neuen Software auf den Mikroprozessor zu aktualisieren. Eine weitere Möglichkeit zur Ausbildung der Einheit 21 stellen FPGA's dar, deren programmierbare Logik jederzeit rekonfigurierbar ist. Ebenso ist es möglich, die Einheit 21 als Application Specific Integrated Circuit (ASIC) auszubilden. Im Zuge der Bestimmung der Verkehrssituation durch die Einheit 21 kann die Einheit 21 entscheiden, dass eine kritische Verkehrssituation dann vorliegt, wenn bei unveränderter Beibehaltung der Fahrtrichtung und Fahrtgeschwindigkeit eine Kollision mit einem anderen Fahrzeug, einem Fußgänger oder einem Fahrradfahrer bevorsteht. Beispielsweise kann die Einheit 21 auf Basis der ausgewerteten Messgrößen der Sensoren 10 Berechnungen durchrühren, welche eine Kollision des Fahrzeugs mit anderen Verkehrsteilnehmern in einer berechneten Zeit von t_{Mess} prädizieren, und entscheiden, dass dann eine kritische Verkehrssituation vorliegt, wenn die berechnete Zeit t_{Mess} eine Toleranzzeit t_{Ref}, welche als Referenzgröße gegeben sein kann, unterschreitet. So ist es beispielsweise möglich, dass bei einer von der Einheit 21 berechneten Relativgeschwindigkeit Vᵣₑₗ zwischen dem Fahrzeug und einem anderen Verkehrsteilnehmer von Vᵣₑₗ=100 km/h und einem von der Einheit 21 berechneten Abstand d_{abst} zwischen dem Fahrzeug und dem anderen Verkehrsteilnehmer von d_{abst}= 100 Meter die Einheit 21 eine Kollision in einer Zeit von t_{Mess}=3,6 Sekunden prädiziert, welche eine Toleranzzeit von t_{Ref} =4 Sekunden unterschreitet, und somit die Einheit 22 die Ausgabe eines akustischen Warnsignals initiiert.

Ferner ist es möglich, dass die Sensoren 10 Meßgrößen bereitstellen, anhand derer die Einheit 20 zur Auswertung der Meßgrößen Bildsignale oder Bilddaten generiert. Diese Bildsignale oder Bilddaten können dann durch die Einheit 21 mittels Algorithmen zur digitalen Bildverarbeitung analysiert werden. Derartige Algorithmen können dann anhand der Bildsignale oder Bilddaten andere Verkehrsteilnehmer oder Hindernisse detektieren. Es ist außerdem möglich, durch derartige Algorithmen eine Relativgeschwindigkeit Vᵣₑₗ zwischen dem Fahrzeug und einem anderen Verkehrsteilnehmer oder auch einem Hindernis zu berechnen. Ferner kann ein Abstand d_{abst} zwischen dem Fahrzeug und einem anderen Verkehrsteilnehmer oder einem Hindernis berechnet werden. Anhand solcher berechneten Größen kann auf die bereits zuvor beschriebene Weise entscheiden werden, ob eine kritische Verkehrssituation vorliegt.

Liegt durch eine Verkehrssituation eine Gefahr vor, so aktiviert die Einheit 22 die Ausgabe eines akustischen Warnsignals über eine der Einheiten 30, 31, 33 zur Ausgabe des Warnsignals. Hierbei ist es beispielsweise möglich, dass das akustische Warnsignal aus dem Speicher 24 ausgelesen wird und von der Einheit 22 über die Lautsprecher 30, 31 ausgegeben wird. Alternativ kann statt einer Ausgabe eines zuvor abgespeicherten Warnsignals wie in Figur 2 dargestellt die Einheit 22 über eine Schnittstelle 34 eine weitere Einheit 33 zur Schallerzeugung mittels eines Steuersignals ansteuern, so dass die Einheit 33 das Warnsignal selbst erzeugt.

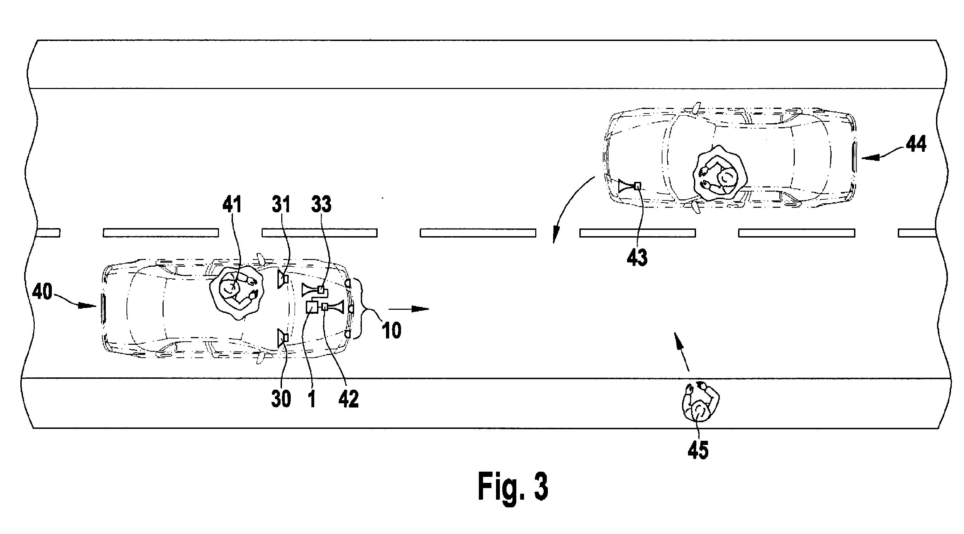

In Figur 3 ist eine Verkehrssituation dargestellt, an welcher ein Fahrzeug 40 sowie ein weiteres Fahrzeug 44 als auch ein Fußgänger 45 beteiligt sind. Anstelle des Fußgängers 45 ist ebenso ein weiterer Verkehrsteilnehmer denkbar, wie beispielsweise ein Radfahrer oder ein Skateboardfahrer. Das Fahrzeug 40 des Fahrers 41 ist sowohl mit einer eigenen Autohupe 42 des Fahrzeugs 40 ausgerüstet, als auch mit den Sensoren 10, dem Steuergerät 1 sowie Einheiten zur Ausgabe des akustischen Warnsignals 30, 31, 33. Wird aufgrund der Messgrößen der Sensoren 10 durch das Steuergerät 1 eine kritische Verkehrssituation festgestellt, so wird über die Einheiten zur Ausgabe des akustischen Warnsignals 30, 31, 33 ein Signal ausgegeben, welches zwar dem Warnsignal einer Autohupe ähnlich ist, sich aber klanglich von der Autohupe 42 des Fahrzeugs 40 unterscheidet. Der klangliche Unterschied der akustischen Warnsignale wird im. Falle monophoncr akustischer Warnsignale durch unterschiedliche Grundfrequenzen erreicht, kann aber zusätzlich auch durch unterschiedlich starke Ausprägungen möglicher Formanten gegeben sein. Ebenso wird im Falle homophoner akustischer Warnsignale eine Unterscheidung der akustischen Warnsignale sowohl aufgrund unterschiedlicher Grundfrequenzen von Grundtönen als auch aufgrund von Intervallverhälmissen des Grundtons zu weiteren Obertönen vorgenommen. Es könnte ein homophones akustisches Warnsignal also durch einen Grundton mit einer Grundfrequenz von 440 Hz mit dazugehörigem Oberton im Verhältnis einer kleinen Terz bei einer Frequenz von 528 Hz ausgebildet sein, während ein weiteres homophones akustisches Warnsignal durch einen Grundton mit einer Grundfrequenz von 489 Hz mit dazugehörigem Oberton bei einer Frequenz von 733,5 Hz im Verhältnis einer reinen Quinte ausgebildet sein kann. Das Verhältnis der Grundfrequenz des Grundtons zu der Frequenz möglicher Obertöne ist hierbei nicht auf Intervallverhältnisse der chromatischen Tonleiter beschränkt. Ebenso ist es möglich, dass ein akustisches Warnsignal als ein homophones Warnsignal ausgebildet ist, während ein anderes akustisches Warnsignal als ein monophoner Klang ausgebildet ist.

Liegt beispielsweise eine kritische Verkehrssituation dadurch vor, dass das Fahrzeug 44 sich zu nahe an das Fahrzeug 40 heranbewegt, und bei Beibehaltung der Bewegungsrichtungen der Verkehrsteilnehmer eine Kollision droht, so bewirkt die Ausgabe eines akustischen Warnsignals über die Einheiten 30, 31, 33, dass der Fahrer 41 das akustische Warnsignal nicht als das Warnsignal der Autohupe 42 seines eigenen Fahrzeugs 40 wahrnimmt, sondern es als ein akustisches Warnsignal der Autohupe 43 des entgegenkommenden Fahrzeugs 44 interpretiert. Ebenso ist es möglich, dass bei Vorliegen einer kritischen Verkehrssituation durch eine zu starke Annäherung eines Fußgängers 45 zur Fahrbahn ein akustisches Warnsignal über die Einheiten 30, 31, 33 ausgegeben wird.

## Patentansprüche

1. Steuergerät (1) mit einer Schnittstelle (14) zu Sensoren (10) zur Erfassung einer Verkehrssituation eines Fahrzeugs (40), einer Einheit zur Auswertung von Messgrößen (20) der Sensoren, eine Einheit zur Bewertung (21) der Messgrößen zur Bestimmung der Verkehrssituation hinsichtlich einer möglichen Gefährdung, einer Einheit (22) zur Aktivierung der Ausgabe eines akustischen Warnsignals und wenigstens einer Schnittstelle (32, 34) zu mindestens einer Einheit zur Ausgabe eines akustischen Warnsignals (30, 31, 33), wobei mehrere Warnsignale in einem Speicher (24) des Steuergeräts (1) abgespeichert sind, **dadurch gekennzeichnet, dass** das akustische Warnsignal durch den Nutzer aus den mehreren Warnsignalen auswählbar ist und dass sich das ausgewählte akustische Warnsignal und das Signal einer Autohupe (42) des Fahrzeugs (40) in ihrer Grundfrequenz unterscheiden.

2. Steuergerät nach Anspruch 1 **dadurch gekennzeichnet, dass** zur Bestimmung der Verkehrssituation mittels eines funktionalen Zusammenhangs der Messgrößen der Sensoren (10) sowie notwendiger Referenzgrößen ein Speicher (24) vorhanden ist, in welchem die notwendigen Referenzgrößen abgespeichert sind.

3. Warneinrichtung mit Steuergerät nach einem der vorhergehenden Ansprüche, **dadurch gekennzeichnet, dass** das Steuergerät (1) über eine Schnittstelle (14) mit Sensoren (10) zur Erfassung einer Verkehrssituation eines Fahrzeuges (40) verbunden ist, und dass das Steuergerät (1) über wenigstens eine Schnittstelle (32,34) mit Einheiten (30,31,32) zur Ausgabe eines akustischen Warnsignals verbunden ist.

4. Warneinrichtung mit Steuergerät nach Anspruch 3, **dadurch gekennzeichnet, dass** die mit dem Steuergerät über eine Schnittstelle (14) verbundenen Sensoren (10) wenigstens einen Ultraschallsensor (11), und/oder einen Radarsensor (12), und/oder einen Sensor zur Abstandsmessung (13) aufweisen.

5. Warneinrichtung mit Steuergerät nach einem der Ansprüche 3 oder 4, **dadurch gekennzeichnet, dass** das in dem Speicher (24) abgespeichertes akustisches Warnsignal über mindestens einen Lautsprecher (30,31) ausgeben wird.

6. Warneinrichtung mit Steuergerät nach einem der Ansprüche 3 oder 4, **dadurch gekennzeichnet, dass** das Steuergerät (1) eine über eine Schnittstelle (34) mit dem Steuergerät (1) verbundene Einheit (33) zur Erzeugung des akustischen Warnsignals anhand eines Steuersignals zur Aktivierung der Einheit (33) ansteuert.

7. Verfahren zur Ausgabe eines akustischen Warnsignals in einem Fahrzeug zur Erregung der Aufmerksamkeit eines Insassen (41) des Fahrzeugs (40) als Nutzer bei Gefahr durch eine Verkehrssituation eines Fahrzeugs, wobei mehrere Warnsignale in einem Speicher (24) eines Steuergeräts (1) abgespeichert sind, **dadurch gekennzeichnet, dass** das akustische Warnsignal durch den Nutzer aus den mehreren Warnsignalen auswählbar ist und dass sich das ausgewählte akustische Warnsignal und das Signal einer Autohupe (42) des Fahrzeugs (40) in Ihrer Grundfrequenz unterscheiden.

8. Verfahren nach Anspruch 7, **dadurch gekennzeichnet, dass** nach Bestimmung der Verkehrssituation mittels eines funktionalen Zusammenhangs von Messgrößen von Sensoren (10) sowie notwendiger Referenzgrößen, welche in einem Speicher (23) abgespeichert sind, das akustische Warnsignal von einer Einheit (22) zur Aktivierung der Ausgabe eines akustischen Warnsignals aus einem Speicher (24) ausgelesen wird und bei Vorliegen einer kritischen Verkehrssituation über mindestens einen Lautsprecher (30,31) ausgegeben wird.

9. Verfahren nach einem der Ansprüche 7 oder 8, **dadurch gekennzeichnet, dass** nach Bestimmung der Verkehrssituation mittels eines funktionalen Zusammenhangs von Messgrößen von Sensoren (10) sowie notwendiger Referenzgrößen, welche in einem Speicher (23) abgespeichert sind, das akustische Warnsignal von einer Einheit (33) zur Erzeugung des akustischen Warnsignals ausgegeben wird, wobei die Einheit (33) über eine Schnittstelle (34) durch ein Steuersignal aktiviert wird.

## Claims

1. Control device (1) having an interface (14) with sensors (10) for sensing a traffic situation of a vehicle (40), a unit for evaluating measurement variables (20) of the sensors, a unit for evaluating (21) the measurement variables in order to determine the traffic situation with regard to a possible hazard, a unit (22) for activating the outputting of an acoustic warning signal and at least one interface (32, 34) with at least one unit for outputting an acoustic warning signal (30, 31, 33), wherein a plurality of warning signals are stored in a memory (24) of the control device (1), **characterized in that** the acoustic warning signal can be selected from the plurality of warning signals by the user, and **in that** the selected acoustic warning signal and the signal of a car horn (42) of the vehicle (40) differ in their fundamental frequency.

2. Control device according to Claim 1, **characterized in that** a memory (24) in which the necessary reference variables are stored is provided for determining the traffic situation by means of a functional relationship between the measurement variables of the sensors (10) and necessary reference variables.

3. Warning device having a control device according to one of the preceding claims, **characterized in that** the control device (1) is connected via an interface (14) to sensors (10) for sensing a traffic situation of a vehicle (40), and **in that** the control device (1) is connected via at least one interface (32, 34) to units (30, 31, 32) for outputting an acoustic warning signal.

4. Warning device having a control device according to Claim 3, **characterized in that** the sensors (10) which are connected to the control device via an interface (14) have at least one ultrasonic sensor (11) and/or one radar sensor (10) and/or one sensor (13) for measuring distance.

5. Warning device having a control device according to one of Claims 3 and 4, **characterized in that** the acoustic warning signal which is stored in the memory (24) is output via at least one loudspeaker (30, 31).

6. Warning device having a control device according to one of Claims 3 and 4, **characterized in that** the control device (1) actuates a unit (33), connected to the control device (1) via an interface (34), for generating the acoustic warning signal on the basis of a control signal for activating the unit (33).

7. Method for outputting an acoustic warning signal in a vehicle for attracting the attention of a vehicle occupant (41) of the vehicle (40) as a user when there is a risk presented by a traffic situation of a vehicle, wherein a plurality of warning signals are stored in a memory (24) of a control device (1), **characterized in that** the acoustic warning signal can be selected from the plurality of warning signals by the user, and **in that** the selected acoustic warning signal and the signal of a car horn (42) of the vehicle (40) differ in their fundamental frequency.

8. Method according to Claim 7, **characterized in that**, after the traffic situation has been determined by means of a functional relationship of measurement variables of sensors (10) and necessary reference variables which are stored in a memory (23), the acoustic warning signal is read out from a memory (24) by a unit (22) for activating the outputting of an acoustic warning signal, and if a critical traffic situation is present said warning signal is output via at least one loudspeaker (30, 31).

9. Method according to one of Claims 7 or 8, **characterized in that**, after the traffic situation has been determined by means of a functional relationship of measurement variables of sensors (10) and necessary reference variables which are stored in a memory (23), the acoustic warning signal is output by a unit (33) for generating the acoustic warning signal, wherein the unit (33) is activated via an interface (34) by means of a control signal.

## Revendications

1. Appareil de commande (1) avec une interface (14) vers des capteurs (10) destinés à détecter une situation de trafic d'un véhicule à moteur (40), une unité pour évaluer des grandeurs de mesure (20) des capteurs, une unité pour interpréter (21) les grandeurs de mesure afin de déterminer une situation de trafic dans l'optique d'une menace possible, une unité (22) pour activer l'émission d'un signal d'alerte acoustique et au moins une interface (32, 34) vers au moins une unité permettant d'émettre un signal d'alerte acoustique (30, 31, 33), dans lequel plusieurs signaux d'alerte sont mémorisés dans une mémoire (24) de l'appareil de commande (1), **caractérisé en ce que** le signal d'alerte acoustique peut être sélectionné par l'utilisateur parmi les multiples signaux d'alarme et **en ce que** le signal d'alerte acoustique sélectionné et le signal d'un klaxon (42) du véhicule à moteur (40) se différencient par leur fréquence fondamentale.

2. Appareil de commande selon la revendication 1, **caractérisé en ce qu'**il comporte, pour la détermination de la situation de trafic au moyen d'une relation fonctionnelle des grandeurs de mesure des capteurs (10) ainsi que des grandeurs de référence nécessaires, une mémoire (24) dans laquelle les grandeurs de référence nécessaires sont mémorisées.

3. Dispositif d'alerte avec un appareil de commande selon l'une quelconque des revendications précédentes, **caractérisé en ce que** l'appareil de commande (1) est relié par une interface (14) à des capteurs (10) destinés à détecter une situation de trafic d'un véhicule à moteur (40), et **en ce que** l'appareil de commande (1) est relié par au moins une interface (32, 34) à des unités (30, 31, 33) permettant d'émettre un signal d'alerte acoustique.

4. Dispositif d'alerte avec un appareil de commande selon la revendication 3, **caractérisé en ce que** les capteurs (10) reliés à l'appareil de commande par une interface (14) comprennent au moins un capteur à ultrasons (11), et/ou un détecteur radar (12), et/ou un capteur de mesure de distance (13).

5. Dispositif d'alerte avec un appareil de commande selon l'une quelconque des revendications 3 ou 4, **caractérisé en ce que** le signal d'alerte acoustique mémorisé dans la mémoire (24) est émis au moyen d'au moins un haut-parleur (30, 31).

6. Dispositif d'alerte avec un appareil de commande selon l'une quelconque des revendications 3 ou 4, **caractérisé en ce que** l'appareil de commande (1) commande une unité (33) reliée à l'appareil de commande (1) par une interface (34) pour produire le signal d'alerte acoustique à l'aide d'un signal de commande pour activer l'unité (33).

7. Procédé d'émission d'un signal d'alerte acoustique dans un véhicule à moteur pour attirer l'attention d'un occupant (41) comme utilisateur du véhicule à moteur (40) en cas de danger dû à une situation de trafic d'un véhicule à moteur, dans lequel on mémorise plusieurs signaux d'alerte dans une mémoire (24) d'un appareil de commande (1), **caractérisé en ce que** le signal d'alerte acoustique peut être sélectionné par l'utilisateur parmi les multiples signaux d'alerte et **en ce que** le signal d'alerte acoustique sélectionné et le signal d'un klaxon (42) du véhicule à moteur (40) se différencient par leur fréquence fondamentale.

8. Procédé selon la revendication 7, **caractérisé en ce que**, après détermination de la situation de trafic au moyen d'une relation fonctionnelle de grandeurs de mesure de capteurs (10) ainsi que de grandeurs de référence nécessaires, qui sont mémorisées dans une mémoire (23), le signal d'alerte acoustique est lu dans une mémoire (24) par une unité (22) pour activer l'émission d'un signal d'alerte acoustique et est émis par au moins un haut-parleur (30, 31) en présence d'une situation de trafic critique.

9. Procédé selon l'une quelconque des revendications 7 ou 8, **caractérisé en ce que**, après détermination de la situation de trafic au moyen d'une relation fonctionnelle de grandeurs de mesure de capteurs (10) ainsi que de grandeurs de référence nécessaires, qui sont mémorisées dans une mémoire (23), le signal d'alerte acoustique est émis par une unité (33) pour produire le signal d'alerte acoustique, dans lequel l'unité (33) est activée par un signal de commande par l'intermédiaire d'une interface (34).
